# EUROPÄISCHE PATENTSCHRIFT

(11) **EP 1 058 047 B1**
(45) Veröffentlichungstag und Bekanntmachung des Hinweises auf die Patenterteilung: **29.09.2004**
(21) Anmeldenummer: 00107317.0
(22) Anmeldetag: 04.04.2000
(51) Int. Cl.: F21S 10/00, F21V 14/08, F21V 11/14

(54) **Lichttechnische Abblendeinrichtung, insbesondere für Beleuchtungsgeräte wie Studioscheinwerfer oder dergleichen optische Vorrichtungen**
Light dimming device, in particular for lighting units such as studio lights or similar optical devices
Dispositif obscurcissant, notamment pour appareils d' éclairage du type projecteur de studio ou pour appareils optiques similaires

(30) Priorität: 31.05.1999 DE 29909503 U
(43) Veröffentlichungstag der Anmeldung: 06.12.2000
(73) Patentinhaber: Licht-Technik Vertriebs GmbH, 80805 München (DE)
(72) Erfinder: Grill, Bernhard, 82402 Seeshaupt (DE); Amling, Manfred, 94140 Ering (DE)
(74) Vertreter: Popp, Eugen, Dr.

(56) Entgegenhaltungen:
- EP-A- 0 840 873
- DE-A- 2 031 828
- GB-A- 2 253 279
- US-A- 2 553 622
- US-A- 2 735 929
- US-A- 4 018 527

## Beschreibung

Die Erfindung betrifft eine lichttechnische Abblendeinrichtung, insbesondere für Beleuchtungsgeräte wie Studioscheinwerfer oder dergleichen optische Vorrichtungen, mit mehreren, übereinandergreifenden beweglichen Lamellen und einen Lamellenantrieb gemäß Oberbegriff des Schutzanspruchs 1.

Beispielsweise aus dem deutschen Gebrauchsmuster G 94 08 901.9 ist eine verstellbare Jalousie-Blende für optische Zwecke, insbesondere für Beleuchtungsgeräte wie Studioscheinwerfer bekannt. Diese bekannte Blende besteht aus einer Vielzahl von Lamellen, die parallel nebeneinander angeordnet und um ihre Längsachsen drehbar gelagert sind. Die Drehbewegung erfolgt mittels einer speziellen Verstelleinrichtung in Form einer Koppelstange, einer Riemenscheibe und mit Hilfe eines endlos umlaufenden Zahnriemens.

Die vorstehend kurz beschriebene mechanische Abblendeinrichtung bietet den Vorteil, daß beim eigentlichen Abblendvorgang im Gegensatz zu einer elektronischen Regelung der Lichtquelle die Farbtemperatur des Lichts erhalten bleibt, was beim Einsatz im Film und Fernsehen von Vorteil ist.

Weiterhin bekannte Apertur- oder Öffnungsblenden basieren auf mechanischen Anordnungen, bei denen der Querschnitt des einfallenden Strahlenbündels begrenzt wird. Insbesondere werden primär die Randstrahlen abgeblendet.
Bei verstellbaren Öffnungsblenden werden übereinandergreifende Lamellen mechanisch angetrieben. Derartige Abblendeinrichtungen sind als Irisblenden bekannt. Bei Irisblenden erfolgt der Abblendvorgang von den Randseiten quasi konzentrisch zur optischen Achse, d.h. zur Mitte des hindurchtretenden Strahlungsbündels hin.

Bei vielen Effektbeleuchtungsfällen, welche auf eine diffuse Bestrahlung von Objekten oder Personen zurückgreifen, soll beim Abblendvorgang das diffuse Lichterscheinungsbild erhalten bleiben.

Hier eingesetzte Irisblenden führen jedoch dazu, daß durch das primäre Abdecken der Randstrahlen der Lichtfleck an Konturenschärfe gewinnt, was jedoch unerwünscht ist.

In der Patentschrift EP-A-0 840 873 wird ein Abblendvorrichtung offenbart bei der vor dem vollständigen Schließender Blende das strahlbündel im Bereich der optischen Achse abgedeckt ist.

Es ist daher Aufgabe der Erfindung, eine weiterentwickelte lichttechnische Abblendeinrichtung, insbesondere für Beleuchtungsgeräte wie Studioscheinwerfer oder dergleichen optische Einrichtungen, auf der Basis übereinandergreifender beweglicher Lamellen und einen Lamellenantrieb anzugeben, welche es gestattet, ein diffuses Strahlungsbild zu erhalten, ohne daß eine unerwünschte Änderung der Lichtcharakteristik beim Zufahren der Blende gegeben ist. Darüber hinaus soll eine derartige Abblendeinrichtung eine möglichst geringe Anzahl mechanisch bewegter Elemente aufweisen, so daß die Reaktionszeit hinsichtlich des Verstellregimes verkürzt wird und die Aufwendungen für den Antrieb insgesamt gering gehalten werden können, so daß ein kostengünstiges Herstellen möglich wird.

Die Lösung der Aufgabe der Erfindung erfolgt mit einer Abblendeinrichtung gemäß den Merkmalen des Schutzanspruchs 1, wobei die Unteransprüche mindestens zweckmäßige Ausgestaltungen und Weiterbildungen umfassen.

Der Grundgedanke der Erfindung liegt demgemäß darin, einzelne beabstandete Lamellen jeweils um einen außerhalb der Lichtdurchtrittsöffnung befindlichen Anlenkpunkt verschwenkbar anzuordnen und derart anzutreiben, daß die Lamellen synchron in den Strahlengang hinein und aus diesem heraus bewegt werden können.

Erfindungsgemäß besitzen die Lamellen eine spezielle Sichelform, so daß beim Bewegen der Lamellen, d.h. dem Schließen der Blende, die jeweiligen Sichelspitzen und die sich daran anschließenden Flächen der Sichel auf die optische Achse der Abblendeinrichtung zulaufen.
Die einzelnen sichelförmigen Lamellen sind so geführt, daß das Strahlenbündel in mehrere hinsichtlich der Flächengröße beim Abblendvorgang veränderliche Kreiszweiecke geteilt wird, wobei sich diese Kreiszweiecke im wesentlichen radial zur optischen Achse bedingt durch die Kreiszweieckform leicht gekrümmt, erstrecken.

Mit einem zunehmenden Schließen der Blende, d.h. einer zur optischen Achse hin erfolgenden Bewegung der Lamellen, verkleinern sich die Kreiszweieckflächen. Durch an der Sichelspitze jeweils angeordnete oder angeformte Segmente wird dafür Sorge getragen, daß vor dem Schließen der Blende zunächst das Strahlenbündel im Bereich der optischen Achse abgedunkelt bzw. abgedeckt wird. Durch die vom Mittelpunkt, d.h. der optischen Achse sich dann erstreckenden verbleibenden Kreiszweieckflächen, die eine sogenannte Mondscheibenform besitzen, wird der diffuse Charakter der von der Lichtquelle ausgehenden hindurchtretenden Strahlung unverändert und bleibt als Abbild erhalten.

Die erwähnten Sichelspitzensegmente besitzen bevorzugt eine Kreisform, wobei die einzelnen Kreise bei Bewegung der Lamellen zur Deckung bringbar sind.

Weiterhin weisen die Sichelkanten Vor- und Rücksprünge auf, wobei diese Vor- und Rücksprünge im wesentlichen eine Halbkreisform, eine Dreieck- oder U-Form besitzen. Die Rücksprünge können durch Ausstanzen oder dergleichen mechanische Bearbeitung in die Lamellen eingebracht werden. Selbstverständlich sind auch Vor- und Rücksprünge nach Art einer Zahnung denkbar.

Die Vor- und Rücksprünge stellen in Verbindung mit der Sichelform der Lamellen eine effektive Möglichkeit dar, auch quasi am Ende mit fast maximaler Blendenschließstellung noch über eine relativ große Erstreckung ausgehend von der optischen Achse Teilstrahlung hindurchtreten zu lassen. Auch dies ist eine wesentliche wirksame Maßnahme zum Erhalt der diffusen Gestalt der gewünschten optischen Abbildung.

Hinsichtlich des konstruktiven Aufbaus sind die Lamellen je mit einem drehbeweglichen Achskörper verschraubt. Der Achskörper stützt sich gegen eine Basisplatte ab. Untereinander sind die Achskörper über einen gemeinsamen Riemenantrieb mit einem Antriebsmotor zum synchronisierten Bewegen verbunden.

Die Basisplatte weist Stifte auf, die mit an den Lamellen ausgebildeten Anschlägen drehwinkelbegrenzend zusammenwirken.

Zur Verschraubung der einzelnen Lamellen mit dem Achskörper sind in den Lamellen Langlöcher eingebracht, so daß in besonders einfacher Weise ein Feinjustieren der Dreh- oder Winkelposition der Lamellen untereinander realisiert werden kann.

Die Lamellen bestehen aus einer Metallplatte, die mit einer optischen, nicht reflektierenden Beschichtung versehen ist.

Bei einer bevorzugten Ausführungsform der Erfindung sind vier Lamellen in Sichelform vorhanden, wobei die Anlenkpunkte untereinander und zur optischen Achse im wesentlichen gleich beabstandet gewählt werden.

Die erfindungsgemäße Abblendeinrichtung mit den Lamellen, Basisplatte und Antrieb kann als an sich bekannter Einschub eine Lichtkanone oder einen Spot ausgebildet sein und je nach Anwendungsfall in einfacher Weise ausgetauscht werden.

Durch die geringe Anzahl mechanisch bewegter Lamellen und die auch höhenmäßig beabstandete Anordnung dieser werden Reibungskräfte minimiert und dadurch die Aufwendungen für den Antrieb zum Verstellen der Blende geringer.

Die einzelnen Lamellen sind durch die leicht zugängliche Schraubverbindung einfach demontierbar und können gegen Lamellen mit anders gearteten Sichelkanten ausgetauscht werden, um eine entsprechende Anpassung an den jeweiligen beleuchtungstechnischen Einsatz zu erreichen. Dadurch, daß im Gegensatz zu Irisblenden keine konzentrische Beeinflussung des Strahlenbündels erfolgt, sondern quasi radial das Strahlenbündel auf Kreiszweiecke geteilt und verformt wird, und im übrigen der Bereich um die optische Achse durch die Sichelspitzensegmente vor dem vollständigen Schließen der Blende abdunkelbar ist, wird das Ausbilden eines quasi Punktlichts als unerwünschter Effekt bei diffuser Abbildung oder Beleuchtung vermieden.

Die Erfindung soll nachstehend anhand eines Ausführungsbeispiels und unter Zuhilfenahme von Figuren näher erläutert werden.

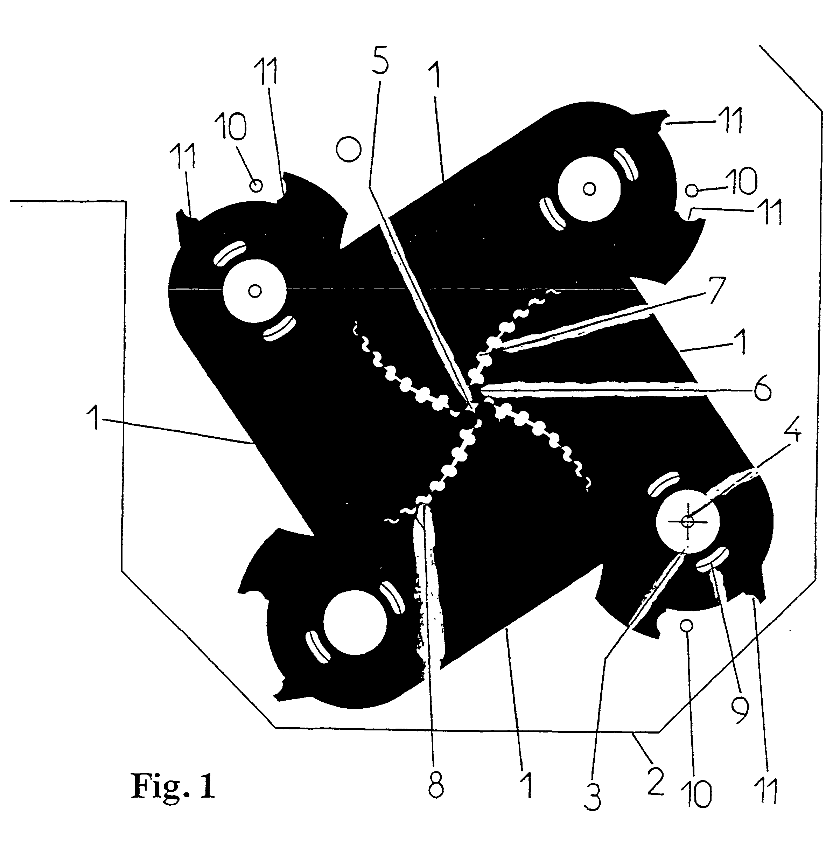

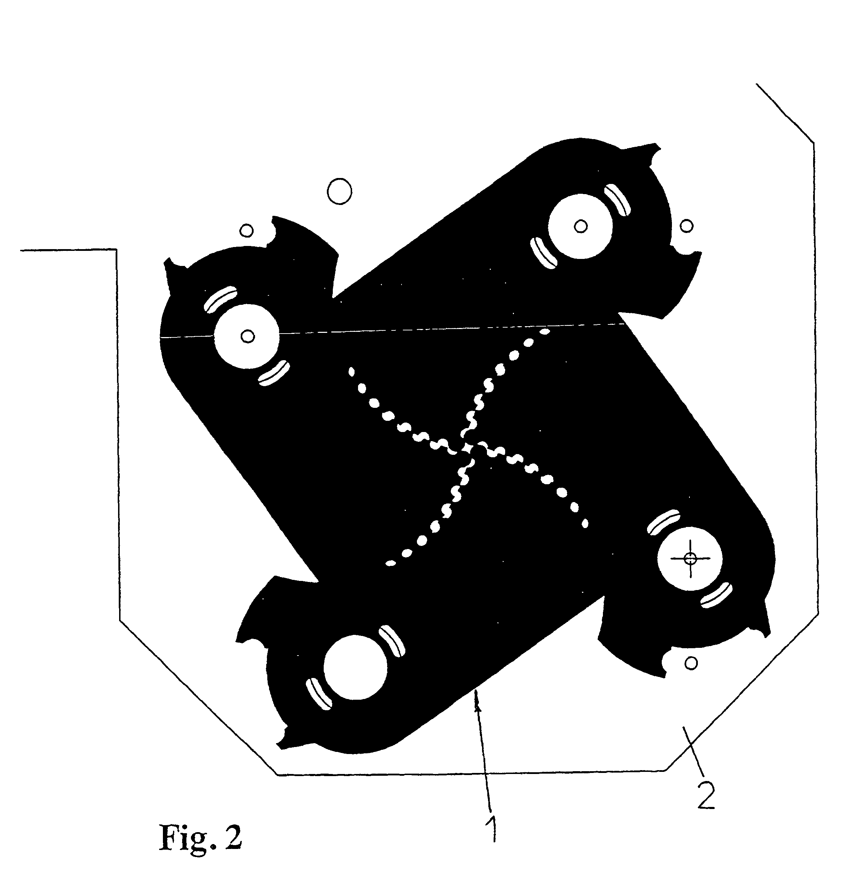

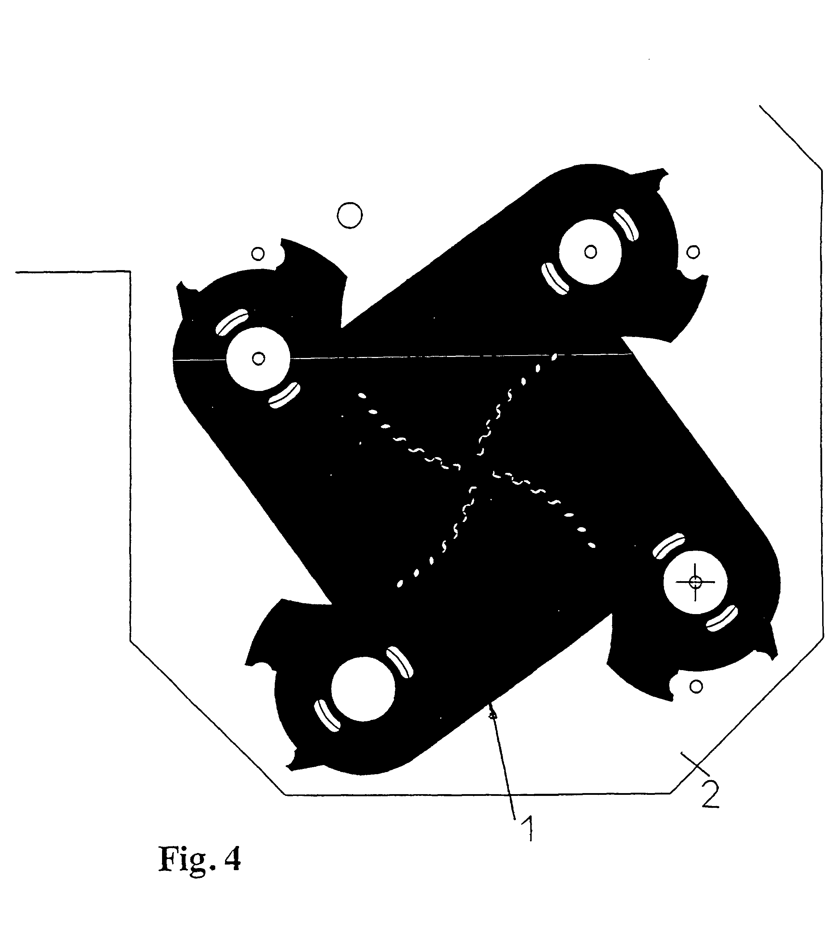

Die Fig. 1 bis 4 zeigen hierbei eine Folge der Bewegung von Lamellen in Sichelform und den sich ausbildenden, bezüglich der Flächengröße kleiner werdenden Kreiszweiecke.

Beim Ausführungsbeispiel nach den Fig. 1 bis 4 wird von einer Anordnung umfassend vier Lamellen 1 in Sichelform ausgegangen, die seitlich als auch höhenmäßig beabstandet außerhalb einer Lichtdurchtrittsöffnung an einer Basisplatte 2 befestigt sind.

Konkret werden die Lamellen 1 mit einem drehbeweglichen Achskörper 3 verbunden, der wiederum auf der Basisplatte 2 in üblicher Weise geführt ist. Ein nicht gezeigter Riemenantrieb umgreift die Achskörper 3 jeweils teilweise und führt auf einen ebenfalls nicht gezeigten Antriebsmotor und ein dort vorgesehenes Antriebsritzel bzw. eine Antriebswelle.

Durch entsprechende Ansteuerung des Antriebsmotors lassen sich die einzelnen Lamellen 1 um den Anlenkpunkt 4 verschwenken, d.h. in den Strahlengang hinein oder aus diesem heraus bewegen.

Die Lamellen 1 weisen eine Sichelform auf, wobei beim Bewegen, wie aus der Abfolge der Fig. 1 bis 4 ersichtlich, die Sichelspitzen auf die optische Achse 5, d.h. den Mittelpunkt der Blende zulaufen.

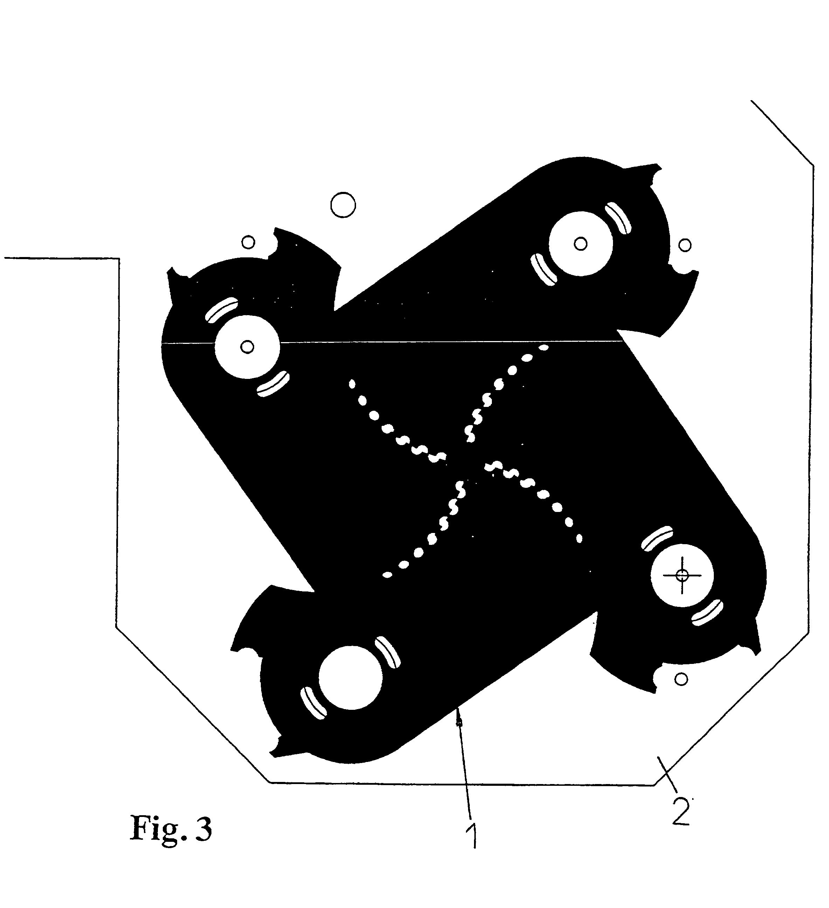

An der Sichelspitze sind jeweils Segmente 6, beim gezeigten Beispiel in Kreisform, vorgesehen, die beim Schließen der Blende den Bereich um die optische Achse 5 abdunkeln, bevor die Blende vollständig geschlossen ist. Dies wird insbesondere aus der Fig. 3 deutlich.

Die Öffnungsbereiche der Blende besitzen eine in der Flächengröße veränderliche Kreiszweiecksform 7.

Um auch im Bereich des unmittelbar bevorstehenden Schließens der Blende noch radial verteilt einen Lichtdurchtritt zu ermöglichen, sind entlang der Sichelkanten Vor- und Rücksprünge 8, z.B. in Halbkreisform oder dergleichen Gestalt ausgebildet.

Selbstverständlich besteht auch die Möglichkeit, die Sichelkantenform nach Art einer Zahnung auszubilden.

Die Lamellen 1 werden mit dem Achskörper 3 verschraubt, wobei hierfür Langlöcher 9 in die Lamellen eingebracht wurden. Die Langlöcher dienen gleichzeitig einem Feinjustieren der Dreh- oder Winkelposition der einzelnen Lamellen 1 untereinander.

An der Basisplatte 2 sind Stifte 10 befestigt, die mit an den Lamellen 1 ausgebildeten Anschlägen 11 drehwinkelbegrenzend zusammenwirken.

Beim Schließen der Blende wird durch synchrone Bewegung der einzelnen Lamellen das Strahlenbündel in Kreiszweiecke 7 geteilt, wobei die Fläche der Kreiszweiecke mit zunehmender Schließlage immer kleiner wird. Die Kreiszweiecke 7 erstrecken sich im wesentlichen kreisbogenförmig radial zur optischen Achse 5 hin.

Im Gegensatz zu üblichen Irisblenden wird beim Abblendvorgang der gewünschte diffuse Charakter erhalten, und es erfolgt keine Ausbildung eines Beleuchtungspunkts hoher und gleichmäßiger Lichtintensität.

Die Lamellen 1 bestehen aus einem plattenförmigen Metall und sind mit einer optischen, nicht reflektierenden Beschichtung, z.B. durch Brünieren versehen.

Durch die geringe Zahl von Lamellen, beim gezeigten Beispiel vier, und der einfachen Antriebsart sowie dem höhenmäßigen Abstand werden Reibungskräfte minimiert und dadurch Antriebskräfte reduziert.

Die vorgestellte Abblendeinrichtung, montiert auf der Basisplatte, kann als an sich bekannter Einschub für eine Lichtkanone oder einen Spot oder dergleichen Beleuchtungsgerät ausgebildet sein, wobei ergänzend die Möglichkeit besteht, einzelne Segmente in leichter Weise auszutauschen. Im Gegensatz zu verschleißbehafteten Iris- oder Lamellenblenden ist die Anzahl mechanisch bewegter Elemente gering und dadurch die vorgestellte Abblendeinrichtung nahezu wartungsfrei.

### Bezugszeichenliste

- 1: Lamellen
- 2: Basisplatte
- 3: Achskörper
- 4: Anlenkpunkt
- 5: optische Achse
- 6: Segmente
- 7: Kreiszweieck
- 8: Vor- und Rücksprünge
- 9: Langlöcher
- 10: Stifte
- 11: Anschläge

## Patentansprüche

1. Lichttechnische Abblendeinrichtung für Beleuchtungsgeräte wie Studioscheinwerfer oder dergleichen optische Vorrichtungen mit mehreren übereinandergreifenden beweglichen Lamellen und einem Lamellenantrieb, wobei die Lamellen (1) jeweils um einen außerhalb der Lichtdurchtrittsöffnung befindlichen Anlenkpunkt (4) verschwenkbar angeordnet sind, wobei mittels des Antriebs die Lamellen (1) synchron in den Strahlengang hinein und aus diesem heraus bewegt werden, und wobei weiterhin die Lamellen (1) eine Sichelform besitzen und beim Bewegen der Lamellen die jeweiligen Sichelspitzen auf die optische Achse (5) der Einrichtung zulaufen, wobei die Sichelform der Lamellen (1) derart gestaltet ist, dass sie sichelartige Lichtdurchtrittsöffnungen (7) definieren, die sich im Wesentlichen radial und gekrümmt zur optischen Achse erstrecken,
**dadurch gekennzeichnet, dass**
an jeder der Sicheispitzen der Lamellen (1) jeweils ein Segment (6) angeordnet oder angeformt ist, durch das vor dem vollständigen Schließen der Blende zunächst das Strahlenbündel im Bereich der optischen Achse (5) abgedeckt wird.

2. Lichttechnische Abblendeinrichtung nach Anspruch 1,
**dadurch gekennzeichnet, dass**
die Sichelspitzensegmente (6) eine im wesentlichen Kreisform besitzen.

3. Lichttechnische Abblendeinrichtung nach einem der vorangegangenen Ansprüche,
**dadurch gekennzeichnet, dass**
sich entlang der Sichelkanten Vor- und Rücksprünge (8) erstrecken.

4. Lichttechnische Abblendeinrichtung nach Anspruch 3,
**dadurch gekennzeichnet, dass**
die Vor- und Rücksprünge (8) im wesentlichen halbkreisförmigen oder Aussparungen in Dreieck- oder U-Form entsprechen.

5. Lichttechnische Abblendeinrichtung nach Anspruch 3,
**dadurch gekennzeichnet, dass**
die Sichelkanten eine gezahnte Form aufweisen.

6. Lichttechnische Abblendeinrichtung nach einem der vorangegangenen Ansprüche,
**dadurch gekennzeichnet, dass**
die Lamellen (1) je mit einem drehbeweglichen Achskörper (3) verbunden sind, wobei sich der Achskörper (3) gegen eine Basisplatte (2) abstützt, und die Achskörper (3) über einen gemeinsamen Riemenantrieb mit einem Antriebsmotor in Verbindung stehen.

7. Lichttechnische Abblendeinrichtung nach Anspruch 6,
**dadurch gekennzeichnet, dass**
die Basisplatte (2) Stifte (10) aufweist, welche mit an den Lamellen (1) ausgebilden Anschlägen (11) drehwinkelbegrenzend zusammenwirken.

8. Lichttechnische Abblendeinrichtung nach Anspruch 6 oder 7,
**dadurch gekennzeichnet, dass**
zur Verbindung, beispielsweise Verschraubung der Lamellen mit dem Achskörper (3) in den Lamellen (1) Langlöcher (9) eingebracht sind, um gleichzeitig eine Feinjustage der Dreh- oder Winkelposition der Lamellen (1) untereinander zu realisieren.

9. Lichttechnische Abblendelnrichtung nach einem der vorangegangenen Ansprüche,
**dadurch gekennzeichnet, dass**
die Lamellen (1) jeweils aus einer, mit einer optischen, nicht reflektierenden Beschichtung versehenen Metallplatte bestehen.

10. Lichttechnische Abblendeinrichtung nach einem der vorangegangenen Ansprüche,
**dadurch gekennzeichnet, dass**
vier Lamellen (1) in Sichelform ausgebildet sind, wobei die Anlenkpunkte (4) untereinander und zur optischen Achse (5) im Wesentlichen gleich beabstandet sind.

## Claims

1. Light dimming device for lighting equipment such as studio spotlights or similar optical apparatus, having a plurality of overlapping movable blades and a blade drive, it being the case that the blades (1) are each arranged pivotably about an articulation point (4) situated outside the light passage aperture, the blades (1) are moved synchronously into and out of the beam path by means of the drive, and the blades (1) furthermore have a sickle shape and the respective sickle tips approach the optical axis (5) of the device as the blades are moved, the sickle shape of the blades (1) being configured such that they define sickle-like light passage apertures (7) extending substantially radially and curvedly with respect to the optical axis,
**characterised in that**
on each of the sickle tips of the blades (1) there is arranged or formed a respective segment (6), by which the beam is first of all stopped out in the region of the optical axis (5) before complete closure of the diaphragm.

2. Light dimming device according to Claim 1,
**characterised in that**
the sickle-tip segments (6) have a substantially circular shape.

3. Light dimming device according to one of the preceding claims,
**characterised in that**
projections and recesses (8) extend along the sickle edges.

4. Light dimming device according to Claim 3,
**characterised in that**
the projections and recesses (8) correspond to substantially semicircular, triangular or U-shaped cutouts.

5. Light dimming device according to Claim 3,
**characterised in that**
the sickle edges have a toothed shape.

6. Light dimming device according to one of the preceding claims,
**characterised in that**
the blades (1) are each connected to a rotatable pivot shaft (3), the pivot shaft (3) being supported on a base plate (2), and the pivot shafts (3) being connected to a drive motor via a common belt drive.

7. Light dimming device according to Claim 6,
**characterised in that**
the base plate (2) has pins (10), which cooperate with stops (11) formed on the blades (1) so as to limit the angle of rotation.

8. Light dimming device according to Claim 6 or 7,
**characterised in that**
elongated holes (9) are made in the blades (1) in order to connect, for example screw, the blades to the pivot shaft (3) and at the same time carry out fine adjustment of the rotary or angular position of the blades (1) relative to one another.

9. Light dimming device according to one of the preceding claims,
**characterised in that**
the blades (1) each consist of a metal plate provided with an optical, non-reflective coating.

10. Light dimming device according to one of the preceding claims,
**characterised in that**
four blades (1) are designed in a sickle shape, the articulation points (4) being substantially equidistant from one another and from the optical axis (5).

## Revendications

1. Dispositif obscurcissant pour éclairage pour appareils d'éclairage du type projecteur de studio ou dispositifs optiques analogues avec plusieurs lamelles mobiles s'emboîtant les unes au-dessus des autres et un dispositif d'actionnement des lamelles, les lamelles (1) étant agencées de manière pivotante autour d'un point d'articulation (4) se trouvant à l'extérieur de l'ouverture d'entrée de la lumière, les lamelles (1) étant bougées, au moyen du dispositif d'actionnement, de manière synchrone dans la trajectoire du faisceau et hors de celle-ci, et en outre, les lamelles (1) possédant une forme de croissant et lors du mouvement des lamelles, les pointes de croissant respectives s'étendant sur l'axe optique (5) du dispositif, la forme de croissant des lamelles (1) étant configurée de telle sorte qu'elles définissent des ouvertures de pénétration de la lumière (7) en forme de croissant, qui s'étendent essentiellement de manière radiale et curviligne par rapport à l'axe optique, **caractérisé en ce que**, sur chacune des pointes de croissant des lamelles (1) respectivement un segment (6) est agencé ou façonné, par lequel, avant la fermeture totale du diaphragme, le faisceau lumineux est d'abord recouvert dans la région de l'axe optique (5).

2. Dispositif obscurcissant pour éclairage selon la revendication 1, **caractérisé en ce que** les segments de pointe de croissant (6) possèdent une forme essentiellement circulaire.

3. Dispositif obscurcissant pour éclairage selon l'une quelconque des revendications précédentes, **caractérisé en ce que** des saillies et des retraits (8) s'étendent le long des arêtes de croissant.

4. Dispositif obscurcissant pour éclairage selon la revendication 3, **caractérisé en ce que** les saillies et les retraits (8) sont essentiellement hémisphériques ou correspondent à des évidements de forme triangulaire ou en U.

5. Dispositif obscurcissant pour éclairage selon la revendication 3, **caractérisé en ce que** les arêtes de croissant présentent une forme dentée.

6. Dispositif obscurcissant pour éclairage selon l'une quelconque des revendications précédentes, **caractérisé en ce que** les lamelles (1) sont respectivement reliées à un corps axial (3) rotatif, le corps axial (3) prenant appui contre un plateau formant base (2), et le corps axial (3) se trouvant relié à un moteur d'actionnement par un dispositif d'actionnement à courroie commun.

7. Dispositif obscurcissant pour éclairage selon la revendication 6, **caractérisé en ce que** le plateau formant base (2) présente des broches (10), lesquelles agissent conjointement de manière à limiter l'angle de rotation avec des butées (11) formées sur les lamelles (1).

8. Dispositif obscurcissant pour éclairage selon la revendication 6 ou 7, **caractérisé en ce que**, pour relier, par exemple visser les lamelles au corps axial (3), des trous oblongs (9) sont ménagés dans les lamelles (1), afin de réaliser simultanément un réglage fin de la position angulaire ou de rotation des lamelles (1) les unes au-dessous des autres.

9. Dispositif obscurcissant pour éclairage selon l'une des revendications précédentes, **caractérisé en ce que** les lamelles (1) se composent respectivement d'une plaque métallique dotée d'un revêtement optique non réfléchissant.

10. Dispositif obscurcissant pour éclairage selon l'une quelconque des revendications précédentes, **caractérisé en ce que** quatre lamelles (1) sont façonnées en forme de croissant, les points d'articulation (4) étant écartés essentiellement de manière égale les uns au-dessous des autres et de l'axe optique (5).
